(19) Europäisches Patentamt
European Patent Office
Office européen des brevets

(11) **EP 1 953 188 A1**

(12) **EUROPEAN PATENT APPLICATION**

(43) Date of publication:
**06.08.2008 Bulletin 2008/32**

(51) Int Cl.:
*C08J 9/14* (2006.01)     *C09K 3/32* (2006.01)

(21) Application number: **07024882.8**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **31.01.2007 KR 20070010094**

(71) Applicant: **Smithers-Oasis Company
Kent OH 44240 (US)**

(72) Inventors:
• **Kim, Kwang Soo
Samsung Raemian Apt. 106-401
Seoul (KR)**

• **Kim, Ik Soo
Chungsol Daewon Apt. 805-1402
Sungnam-Si, Gyeonggi-Do (KR)**
• **Ryu, Hwang Gyu
Geukdong Neulpurun Apt. 11-306
Chungchungnam-Do (KR)**
• **Park, Sang Hyeon
Incheon-Si (KR)**
• **Cheon, Young Jin
Cheonan-Si, Chungnam-Do (KR)**

(74) Representative: **Kesselhut, Wolf
Reble & Klose
Sophienstrasse 17
68165 Mannheim (DE)**

(54) **method of producing oil-absorbing foamed body**

(57) The present invention relates to a foamed phenol resin body which is useful as an oil absorbent (which is an absorbent of oil and hydrophobic liquid) and a production method thereof, and relates to a method of producing an oil-absorbable foamed body, which may be simply produced, may absorb lots of oil even when used in small amounts, and may be formed into various foam products, such as mats, foam or rolls, depending on the types of spilled oil, in order to facilitate the absorption of oil, to a foamed body produced using the method, and to a foam product using the foamed body.

FIG-3

EP 1 953 188 A1

**Description**

The present invention relates to a foamed phenol resin body useful as an oil absorbent (which is an absorbent of oil and hydrophobic liquid) and a production method thereof, and particularly, to a method of producing an oil-absorbable foamed body, which may be simply produced, may absorb lots of oil even when used in small amounts, and may be formed into various foam products, such as foam or rolls, depending on the types of spilled oil, in order to facilitate the absorption of oil, to a foamed body produced using the method, and to a foam product using the foamed body.

Generally, an oil absorbent refers to a medium, which may be applied both to the absorption and recovery of oil spilled in leakage accidents of waste oil occurring on the land, and to the absorption and recovery of marine oil spills. At present, large amounts of oil products are transported and stored in various places, and the kind and number of transport and storage means are rapidly increasing. However, the danger of oil leakage pollution due to leakage accidents resulting from collisions upon the storage and transport of oil is increasing day by day.

In order to solve problems of oil leakage, an oil absorbent, which is presently used, mainly includes peat moss powder, powdered leaf compost, processed dry poultry feathers, processed fur pile, and nonwoven polypropylene fabric. However, in the case of such an oil absorbent, it is difficult to absorb a large amount of oil within a short time and to treat the oil absorbed, and furthermore, the production cost thereof is relatively high. Also, such absorbent has a drawback that harmful gases are generated in the course of incineration of the above absorbent after the absorption of oil.

Below, typical harmful effects of leaked oil are more specifically set forth. For example, at the accidents of marine oil spill, a large amount of oil is discharged at once and is diffused rapidly over wide regions, resulting in severe damage for a long period of time through complicated procedures, such as evaporation, dissolution, emulsification, photo-oxidation, and biodegradation. Therefore, initial control equipment and professional technicians, able to appropriately respond thereto, should be assured. The amount of crude oil and petroleum products in the world that is transported via the sea has reached a billion tons per year. Accordingly, the amount of oil spilled per year has increased from 1,400,000 tons in the early 1980s to 2,360,000 tons in the late 1980s. Due to various efforts has been made since the 1990s, the total amount of oil spilled was not increased, but large-scale accidents still occur frequently. In particular, the number of marine oil spill accidents occurring on domestic shores was reported to be 128 in 1979, but continuously increased to an average of 200 per year in the 1980s and to 390 in the 1990s, respectively. Further, it has been reported that the number of small-scale oil spill accidents attributable to fishing boats has greatly increased (Korean Intellectual Property Office, "Protect the sea from terrorists of the sea: oil streaks", in February 10, 2003).

Upon marine oil spill, as the control means thereof, an oil treating agent and an oil absorbent are used. The oil treating agent, which is a chemical for treating the oil leaked into the sea through chemical and biochemical methods, functions to pulverize the oil into fine particles, capable of being emulsified and dispersed to be easily mixed with seawater, thereby promoting a self-cleaning action. The oil treating agent has various components and different composition ratios of the oil treating agent depending on the types of oil, but it is composed mainly of a solvent, a surfactant, and other additives. The oil treating agent containing aromatic hydrocarbon hardly shows an effect when it has a large (about 5,000 to 10,000 cSt or more). As the drifting oil undergoes weathering, including evaporation, over-oxidation, and the formation of a water-in-oil emulsion, a dispersing treatment for such oil becomes more difficult. Hence, in light of time, such an oil treating agent has a limitation that it should be used prior to a change of the spilled oil with the passage of time. And such an oil is mainly used to be sprayed for the purpose of preventing the flow of oil to seashores and sensitive sea areas.

The oil absorbent is a material for recovering oil through absorption or adsorption, and it is used when the amount of oil spilled is small or a thin oil film is recovered. The absorbent is divided into two types, one of which allows oil to adhere on the surface thereof, the other of which functions to absorb oil. To spray the large amount of the absorbent, a lot of work is required, and a lot of waste is generated. Typically, the absorbent is used in the finishing stages of the control process, or is used to recover a thin oil film near the seashore where it is difficult for a ship to approach. Further, the absorbent may be used when oil is difficult to control using other methods in environmentally sensitive seashore areas, including spawning grounds or damp ground. The oil absorbent should meet the following requirements. First, it should not sink in water after the absorption of oil, second, it should have a low density, third, it should be easily handled, fourth, it should not be toxic, fifth, it should have a high oil absorption rate, and sixth, it should be hydrophobic.

As an attempt to meet the above requirements for an oil absorbent, there was proposed an oil absorbent made of porous nonwoven fabric. However, since the fibrous texture itself has poor oil absorption capability, such an absorbent has a problem that an oil absorption ratio relative to the volume of the oil absorbent is very low. In this regard, Korean Examined Patent Publication No. 1995-1581 discloses an oil absorbent using bird feathers, wherein as a main component, bird feathers in a natural state or bird feathers being pulverized, cut, washed, and dried are mixed with a binding material, which is a carded cotton comprising natural or synthetic fibers or a blend of the carded cottons, at a predetermined ratio, and the resulting mixture is compacted and molded to produce an absorbent, which is then subjected to punching, and thereby an oil absorbent having a plurality of punched holes is obtained. However, the above oil absorbent has a drawback from the point of view of production. All kinds of bird feathers have a very low specific gravity. Therefore, when being transferred by a transfer means such as a conveyor, the feathers are not transferred in a desired transfer direction, due to air resistance, but they fly in the wind or are scattered in the air, which makes it impossible to uniformly mix the feathers with the binder. Such problem makes it impossible that the feathers and the binder may not be uniformly layered or mixed at a predetermined ratio. Therefore, it is actually difficult to produce a homogeneous oil absorbent in which the feathers are uniformly layered or distributed. Also, the feathers have a property of not binding together, while the binder has a property of mutual agglomeration. Therefore, in case where the feathers and the binder are forcibly mixed using a mixer, only the binder, which is made of fibers, is mixed, and the feathers are separated from the binder, and therefore, uniform mixing between the feathers and the binder cannot be expected.

In addition, Korean Patent No. 302467 discloses an oil absorbent, in which the upper and lower surfaces of a feathering layered fabric, having a multilayered structure obtained by alternating synthetic fabric and a feathering layer, are packed with nonwoven fabric. However, the oil absorbent has a low oil absorption ratio due to the multilayered structure thereof, and is also difficult to recycle. Further, the feathers are apt to be removed in a direction of a shaft so that the feather, which is the main material, may be removed from the fabric, despite the double structure thereof, and may thus scatter like dust during the process, resulting in poor working conditions. Also, in an actual use, the oil absorbent is thrown onto the sea from the ship so that the force (centrifugal force) generated therefrom cause a removal of the feathers from the oil absorbent.

Further, Korean Patent Application No. 10-2003-39538, which was proposed to solve the above problems, discloses an oil absorbent using poultry feathers. That is, the poultry feathers, as a main component, are physically connected to a binder so that they are not removed from the oil absorbent in a working process, or when used. This absorbent is formed such that the feathers are brought into direct contact with the oil to thereby increase the amount of absorption. This oil absorbent is provided in a form of a rope, and thus may be used in many different kinds of places. However, the absorption ratio of this conventional oil absorbent is not high, and consequently the oil absorbent does not absorb a large amount of oil relative to the amount used. Furthermore, problems in which the oil absorbent is difficult to process and treat still remain unsolved.

Accordingly, the present invention has been made keeping in mind the above problems occurring in the related art, and an object of the present invention is to provide a foamed phenol resin body useful as an oil absorbent (which is an absorbent of oil and hydrophobic liquid) and a production method thereof, and particularly provides a method of producing an oil-absorbable foamed body, which may be simply produced, may absorb lots of oil even when used in small amounts, and may be formed into various foamed products, such as foam or rolls, depending on the types of spilled oil, in order to facilitate the absorption of oil, a foamed body produced using the method, and a foam product using the foamed body.

Thus, the present invention provides a method of producing an oil-absorbable foamed body, comprising a first step of adding 40~90 parts by weight of a prepared phenol resin and 1~30 parts by weight of a surfactant, and stirring them; a second step of adding 3~30 parts by weight of a foaming agent to the stirred phenol resin and surfactant, and stirring them; a third step of adding an acidic curing agent making up a balance of 100% by weight to the stirred mixture of the second step, and then mixing them using a mixer; and a fourth step of foaming the mixed compound at a temperature of 5~150°C, thus obtaining a foamed body for absorbing oil.

In addition, the present invention provides an oil-absorbable foamed body, obtained by foaming 40~90 parts by weight of a prepared phenol resin, 1~30 parts by weight of a surfactant, 3~30 parts by weight of a foaming agent, and an acidic foaming agent making up a balance of 100%.

In addition, the present invention provides an oil-absorbable foam product, which comprises a foamed body panel, obtained by cutting a foamed body, obtained by foaming 40~90 parts by weight of a prepared phenol resin, 1~30 parts by weight of a surfactant, 3~30 parts by weight of a foaming agent, and an acidic foaming agent making up a balance of 100%, in a panel form; and a nonwoven fabric envelope for enveloping the foamed body panel, and is commercially available.

[Brief Description of the Drawings]

FIG. 1    is an exploded perspective view illustrating the state of producing the foam product of the present invention;

FIG. 2    is a perspective view illustrating the foam product of the present invention;

FIG. 3    is a cross-sectional view illustrating the foam product of the present invention; and

FIG. 4    is a 100x magnified photograph of the foamed body of the present invention.

The present invention pertains to a method of producing an oil-absorbable foamed body, a foamed body produced thereby, and a foam product using the foamed body, to absorb oil using the foamed body. Thus, the present invention is described in the sequence of a foamed body production method, a foamed body, and foam.

The present invention provides a method of producing the foamed body, including a first step of adding 40~90 parts by weight of a prepared phenol resin with 1~30 parts by weight of a surfactant and stirring them. That is, the phenol resin is added in an amount of 40~90% by weight based on the total weight of all of the components. To the phenol resin, the surfactant is added in an amount of 1~30% by weight, and then a stirring begins. This stirring is to provide a condition for a mixing with a certain degree of uniformity.

Thereafter, the method of the present invention includes a second step of adding 3~30 parts by weight of a foaming agent to the phenol resin and the surfactant as stirred together, and then stirring them. The foaming agent is added to the stirred mixture of phenol resin and surfactant in a mixer. The foaming agent is added in an amount of 3~30% by weight based on 100% by weight of all of the components. The internal temperature of the mixer is preferably maintained at 10~80°C.

Thereafter, the method of the present invention includes a third step of adding an acidic curing agent making up a balance of 100% by weight to the stirred mixture of the second step, and mixing them using a mixer. That is, the acidic curing agent is added to the mixture comprising the phenol resin, the surfactant, and the foaming agent. The acidic curing agent is added in an amount for making up a balance of 100% by weight of all of the components. The expression "the acidic curing agent making up a balance of 100%" means that the curing agent is added in an amount corresponding to the balance of 100% by weight after all of the components, except for the acidic curing agent, have been added at predetermined weight ratios.

Finally, the method of the present invention includes a fourth step of foaming the mixed compounds at a temperature of 5~150°C, thus obtaining a foamed body for absorbing oil and hydrophobic liquid. That is, after the phenol resin, the surfactant, the foaming agent, and the acidic curing agent are stirred in a state of being added during the third step, the above compounds are chemically bound by the foaming agent, to thus be foamed. Preferably, the foaming condition is maintaining a temperature of about 5~150°C. Generally, a higher foaming rate is obtained at a higher temperature, but experimental results show that increasing the temperature exceeding 150°C is difficult. This is because the foamed body is cured before the temperature reaches 150°C or higher. On the other hand, when the temperature is lower than 5°C, foamability is poor and thus a foamed body having high density is obtained, thereby drastically decreasing productivity. Ultimately, it is preferred that the above temperature range be maintained.

Moreover, an attention should be paid to the preparation of the phenol resin of the first step in the following respects.

The phenol resin usable in the present invention includes resol-based phenol resin. The resol-based phenol resin is prepared using a phenol compound, an aldehyde compound, and a basic catalyst. The phenol compound includes one or more selected from among homologues thereof, such as phenol or cresol, and mixtures thereof. The aldehyde compound, reacting with the phenol compound, includes formaldehyde, acetaldehyde, other aldehydes, and mixtures thereof. Further, materials for producing aldehyde, for example, compounds which are capable of producing formaldehyde, such as paraformaldehyde and trioxane, and mixtures thereof, may be used. The basic catalyst mainly includes monovalent or divalent basic materials, for example, sodium hydroxide, ammonium hydroxide, calcium hydroxide, amines such as triethylamine, and basic carbonic acid, such as sodium carbonate and sodium hydrogen carbonate, which may be used alone or in combinations thereof. The reaction between the phenolic compound, except for phenol, and aldehyde, except for formaldehyde or complex thereof, is slower than the reaction between phenol and formaldehyde. Thus, in the present invention, particularly useful is phenol resin prepared from the reaction between phenol and formaldehyde. In the phenol resin usable in the present invention, the chemical molar ratio of phenol and formaldehyde is 1:1.0~1:4.5, and preferably 1:1.5~1:2.5. When the molar ratio exceeds 1:4.5, unreacted formaldehyde remains in an excessive amount so that a material for a reaction with free formaldehyde, such as urea, is essentially required. The resol-based phenol resin usable in the present invention is synthesized as follows.

In a stirring bath, 40~75 parts by weight of phenol is added with 0.5~10 parts by weight of a basic catalyst, and then with formaldehyde making up a balance of 100% by weight, after which stirring is conducted. In this way, when phenol, the basic catalyst, and formaldehyde are added and stirred, phenol is added in an amount of 40~75 parts by weight, the basic catalyst is added in an amount of 1.5-10 parts by weight, and formaldehyde is added in an amount corresponding to the balance of 100% by weight.

A temperature of the stirred mixture is maintained at 50~100°C to carry out a synthesis for 30 min to 10 hours. That is, the stirred mixture is subject to the synthesis, with maintaining the temperature at 50~100°C for 30 min to 10 hours. When the resin having an appropriate molecular weight is obtained, the reaction is stopped, the temperature is decreased to 20~40°C, and an acid is added to thus adjust the pH of the stirred basic solution to 5~7. That is, the stirred solution, which is stirred at the temperature maintained at 50~100°C, is further stirred with the addition of an acid, until the temperature is decreased to about 20~40°C. In this case, it is important to conduct the stirring until the pH of the solution is adjusted to 5~7.

The preparation of the phenol resin useful in the present invention is completed with a dehydration process wherein the solution is heated under a reduced pressure to eliminate water therefrom. That is, the phenol resin is obtained through a step of eliminating water from the resin solution. Water is eliminated by continuously heating the stirred compound obtained from the previous step under the reduced pressure. The phenol resin in such a dehydrated state is the phenol resin required for the present invention.

In the production of the oil-absorbable foamed body of the present invention, the most preferable phenol resin has a resin viscosity of 1000~100000 cps at 25°C and a water content of 1~20%, which has been proven through many experiments by the present applicant. In the case where the resin viscosity exceeds 100000 cps at 25°C or the water content is higher than 20%, reactivity is remarkably decreased. On the other hand, when the resin viscosity is less than 1000 cps at 25°C or the water content is lower than 1%, it is difficult to control a foaming degree because the reaction is too fast. Consequently, the oil-absorbable foamed body produced using the preferable phenol resin as described above is considered to be most effective in exhibiting oil absorption performance thereof.

Here, the oil-absorbable foamed body of the present invention is described in detail.

The foamed body of the present invention is produced by foaming 40~90 parts by weight of the prepared phenol resin, 1~30 parts by weight of a surfactant, 3~30 parts by weight of a foaming agent, and an acidic curing agent making up a balance of 100%. That is, the foamed body of the present invention is produced through the above-mentioned method of producing the oil-absorbable foamed body. The components of the foamed body include the phenol resin, the surfactant, the foaming agent, and the acidic curing agent. The phenol resin is added in an amount of 40~90 parts by weight, the surfactant is added in an amount of 1~30 parts by weight, the foaming agent is added in an amount of 3~30 parts by weight, and the acidic curing agent is added in an amount corresponding to the balance of the total amount. The production conditions are specifically described in the above-mentioned production method, and thus a description thereof is omitted. The properties of the components to be added are mentioned below.

The phenol resin is added in an amount of about 40~90% by weight, and is the actual foaming medium.

In addition, the surfactant is added in an amount of about 1~30% by weight. The surfactant functions to efficiently stir the other components, to improve the compatibility of oil and hydrophobic liquid, and to decrease the surface tension of resin, thus imparting stability suitable for a foaming process thereto. In addition, in the case of the foaming agent, it is added to efficiently foam the phenol resin. Thus, this foaming agent functions to form pores responsible for oil absorption.

In addition, in the case of the acidic curing agent, the amount thereof is set to be the balance of the total amount, except for the amounts of the other components. This curing agent acts as a reaction agent and a reaction catalyst for inducing the curing reaction to obtain a polymer material. That is, when the acidic curing agent is added, it is mixed with the phenol resin, the surfactant, and the foaming agent, all of which are present in a liquid phase, thus generating heat with the reaction with the phenol resin. As such, the stirred compound is foamed and cured while high-temperature heat is generated. The catalyst for inducing such a chemical action is the acidic curing agent.

The phenol resin prepared in the present invention is a resin, obtained by adding 40~75 parts by weight of phenol with 0.5~10 parts by weight of the basic catalyst and formaldehyde making up a balance of 100% by weight. That is, the preparation method is specifically mentioned as above, and an additional description thereof is omitted. The preparation of the phenol resin requires the addition of phenol, the basic catalyst, and formaldehyde.

The porosity of the foamed body was measured using an Autopore IV 9500 mercury porosimeter, available from Micrometrics, USA. As the results, a foamed body having an average pore diameter of 60 $\mu$m or more, and preferably 150~205 $\mu$m, was found to be effective in oil absorption. The applicant of the present invention has revealed great effects of the foamed body of the present invention on the absorption of oil through numerous experiments. The experimental results show that the foamed body having a pore cell diameter of 60 $\mu$m or more is relatively effective in oil absorption capability. If the cell diameter is smaller than 60 $\mu$m, the pore diameter of the foamed body is so small that the oil absorption rate is considerably decreased. From the point of views of the production process, the production amount and cost, and maximum oil absorption performance of the product, and all general particulars, it is most preferable that the cell diameter be 150~205 $\mu$m.

Below, the experimental example for evaluating the effects of the present invention is described, and accordingly, the reason why the porosity and the average pore diameter (= cell diameter) of the foamed body are important in determining oil absorption will be demonstrated.

Experimental Example 1

For the experiment, a foamed body was produced using the above-mentioned method. That is, a phenol resin was prepared through a phenol resin preparation method, and the surfactant was added to the phenol resin, and then stirred. A foaming agent and an acidic curing agent were added to the stirred mixture, and the resulting mixture is stirred and foamed. Various experiments were conducted with changing the amounts of the above components and the general conditions, including the temperature. A great number of experiments were conducted, but a detailed description thereof is omitted. In obtaining the foamed body, the amounts of the components were changed variously, and the conditions were changed in a detailed manner. Among samples obtained with changing the amounts under the different conditions, five samples were selected for experiments. Tests were conducted to determine the average pore diameter, the porosity, and the oil absorption ratio of the samples. The results are given in Table 1 below. The oil absorption test was conducted using a method according to Notification No. 1997-45 of the Korea Coast Guard.

Table 1

| Sample ID | | A | B | C | D | E |
|---|---|---|---|---|---|---|
| Average Pore Diameter ($\mu$m) | | 158.7 | 200.3 | 126.9 | 216.4 | 82.4 |
| Porosity (%) | | 90.88 | 90.7 | 90.59 | 96.7 | 91.7 |
| Oil Absorption Test (Sample Size: 10x10x1 cm) | Foamed Body Weight (F) (g) | 1.62 | 1.43 | 1.72 | 1.32 | 1.86 |
| | Absorption Time | 1 min 1 sec | 51 sec | 7 min 33 sec | 34 sec | 1 hr or longer |
| | After Absorption, Total Weight (G) (g) | 95.5 | 94.7 | 96.1 | 80.2 | 93.2 |
| | Total Mass (G) / Foamed Body Mass (F) | 59.0 | 66.2 | 55.9 | 60.8 | 50.1 |

The above data were accurately analyzed. Actually, much more data were analyzed statistically. As the results, the oil absorption ratio of the foamed body was highly related to a frame of multiple pores constituting the foamed body, that is, the diameter of respective cells. Correspondingly, the porosity is considered to do a considerably important role. The porosity is a unit determining the surface area occupied by the pores of a subject, ranging from 0 to 100%, is defined as below:

$$\phi = Vp/Vm * 100$$

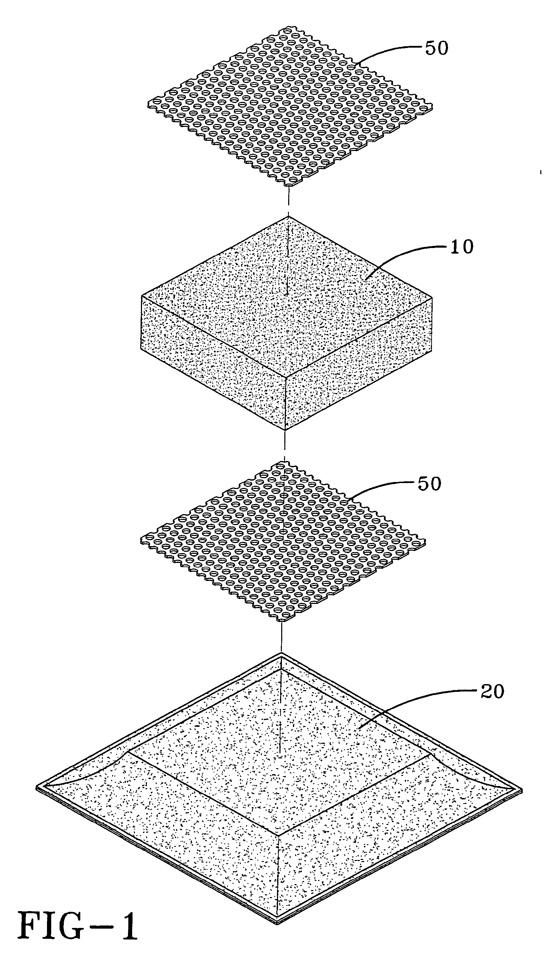

wherein $\phi$ is the porosity, Vp is the volume of a part which is not solid, and Vm is the total volume. From the porosity, it can be analyzed whether unit cells constituting the frame of the foamed body of FIG. 1 are in an open state or in a closed state. Hence, the statement "porosity is high" means that many of the unit cells are present in an open state.

For individual analysis, in the case of the sample E, the porosity was similar to those of the other samples, but the oil absorption time was 1 hour or longer. Further, the average pore diameter thereof was determined to be 82.4 $\mu$m, which was considerably different from the other samples. Thus, through the present experiment, the present applicant has determined the importance of the average diameter of cells in shortening the oil absorption time. As the results of analysis thereof, it is considered that spaces for passing fluid therethrough are not sufficiently assured if the average pore diameter is too small.

In the case of the sample D, the average pore diameter was determined to be 216.4 $\mu$m, which was not very different from that of the sample B, but the oil absorption time was observed to be remarkably shortened. Hence, as is apparent from Table 1, the pore diameter and the porosity could be seen to be closely related with oil absorption performance. These results were verified not only through the above samples but also through many other experiments, but a detailed description thereof is omitted.

Consequently, the most essential factors in determining the effectiveness of oil absorption by the absorbent are appropriate average pore diameter and porosity. That is, the average pore diameter and the porosity should be optimally set. However, it is difficult to obtain a uniformity in the average pore diameter and porosity. In order to attain a diameter and porosity close thereto, the composition ratio and the conditions of the production method of the present invention should be strictly followed. Further, the kinds of components to be added are regarded as important. In Table 1, the "total mass (G)/foamed body mass (F)" means the weight of absorbed oil for 1 g of the foamed body. As is apparent from these results, the foamed body of the present invention absorbed about 50~65 g of oil for 1 g thereof. That is, oil was absorbed in an amount of 59.0 g for 1 g of the sample A, 66.2 g for 1 g of the sample B, 55.9 g for 1 g of the sample C, 60.8 g for 1 g of the sample D, and 50.1 g for 1 g of the sample E, which are considered to be excellent oil absorption ratios. These figures mean that the foamed body of the present invention could absorb an amount of oil equal to about 50~66 times the weight thereof.

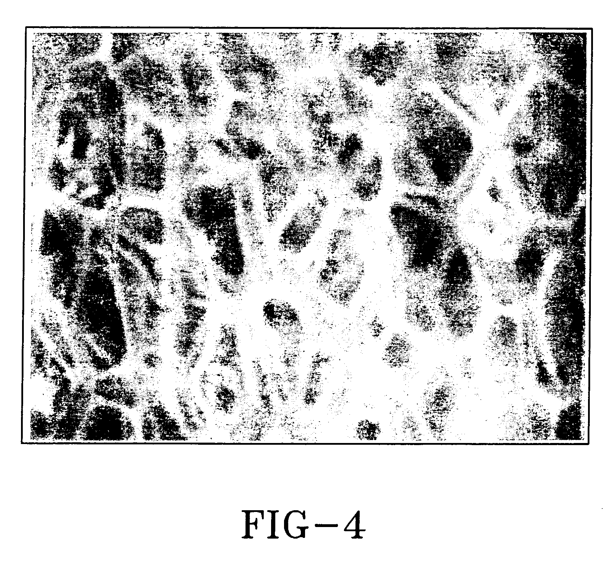

FIG. 4 illustrates the photograph showing the foamed body of the present invention. As shown in this drawing, the internal portion of the foamed body is formed with a porous structure constructed of a frame of multiple cells, in which more cells are present in an open state. For oil absorption, which is the characteristic of the present invention, the cell diameter and the porosity, indicating whether the cells are in an open state, are considered to be very important factors.

To construct the most preferable configuration of the foamed body of the present invention, the porosity thereof should be 60% or more, preferably 85% or more, and more preferably 85~92%. That is, as is apparent from the above example, the foamed body of the present invention exhibits a superior oil absorption ratio when having the porosity in the above range.

Therefore, the surfactant, which is essentially added to produce the foamed body of the present invention, may be used in various forms. For example, a non-ionic surfactant and a silicone surfactant can be used.

In the present invention, the surfactant has the important functions of enabling more efficient stirring and mixing of the phenol resin with the other components, facilitating the formation of a foamed body, and inducing the conversion of the phenol resin into a highly lipophilic material via polymerization to thus absorb oil.

In other words, in order to produce the foamed body or the foam product suitable for oil absorption, surface tension should be decreased in a mixing with the phenol resin, and furthermore, stability should be imparted to the mixture during the foaming process through the curing reaction. For these purposes, the surfactant is used.

The non-ionic surfactant used in the present invention is as follows. That is, the non-ionic surfactant is one or more selected from the group consisting of alcohol ethoxylate; alkylphenol ethoxylate; polyoxyethylene ester; ethoxylated anhydrosorbitol ester; ethoxylated natural fat or oil; ethoxylated lanolin; polyoxyethylene amine; polyoxyethylene fatty acid amide; block copolymer of ethylene oxide, and alkylene oxide having a molecular weight greater than that of ethylene oxide.

The non-ionic surfactant may be prepared through the following procedure, for example, through a chemical reaction between ethylene oxide or alkylene oxide having a molecular weight greater than ethylene oxide, for example prepared by a chemical reaction of propylene oxide or styrene oxide with various chemicals having a reactive hydrogen, such as alcohol, alkylphenol, fatty acid, fatty acid amide, or fatty acid ester.

Another surfactant, usable in the present invention, is a silicone surfactant. Briefly surveying the kinds thereof, the silicone surfactant is one or more selected from the group consisting of silicone polyether copolymer; methyl silicone; dimethyl silicone; polydimethyl silicone; methyl hydrogen silicone; dimethyl siloxane; and alkyl modified silicone, as surfactants containing silicone.

Further, as the component used to produce the foamed body of the present invention, the foaming agent, which is a chemical material preferably having a boiling point of 20~100°C, is one or more selected from $C_{4-8}$ cyclic or chain alkane, alkene, alkyne, petroleum ether, and a compound having fluorine, including monochlorotrifluoromethane. This foaming agent is responsible for inducing the foaming of the phenol resin. Thus, the foaming agent should be essentially used in the present invention.

In addition, the acidic curing agent is used in the present invention, and is one or more selected from the group consisting of inorganic acids, such as sulfuric acid or nitric acid; phosphoric acid; aromatic sulfonic acid; and alkyl sulfonic acid. In the case of the acidic curing agent, it functions as a shape-retaining material for enabling the formation of a foamed body having a predetermined shape. The acidic curing agent acts as a catalyst to cause all of the components to be foamed through the chemical reactions so as to form cells. That is, by adding the acidic curing agent, an exothermic reaction occurs and the temperature increases so that the chemical reaction for polymerization is promoted, which leads to an improvement in foaminess.

Besides the foamed body including the above components, the present invention provides a commercially available foam product, such as foam or a roll, by processing the foamed body. That is, the foamed body is cut to a predetermined size and then packed, and it may be produced into various products in the form of a roll shape or in the forms of general mats, cushions, or blocks. That is, the present invention provides an oil-absorbable foam product, including a foamed body panel 10, obtained by foaming 40~90 parts by weight of the prepared phenol resin, 1~30 parts by weight of the surfactant, 3~30 parts by weight of the foaming agent, and the acidic foaming agent making up a balance of 100%, to thus form a foamed body, and cutting the foamed body in a panel form; and an outer envelope 20 of nonwoven fabric to envelope the foamed body panel 10. As the oil absorbent, the panel 10 may be used alone.

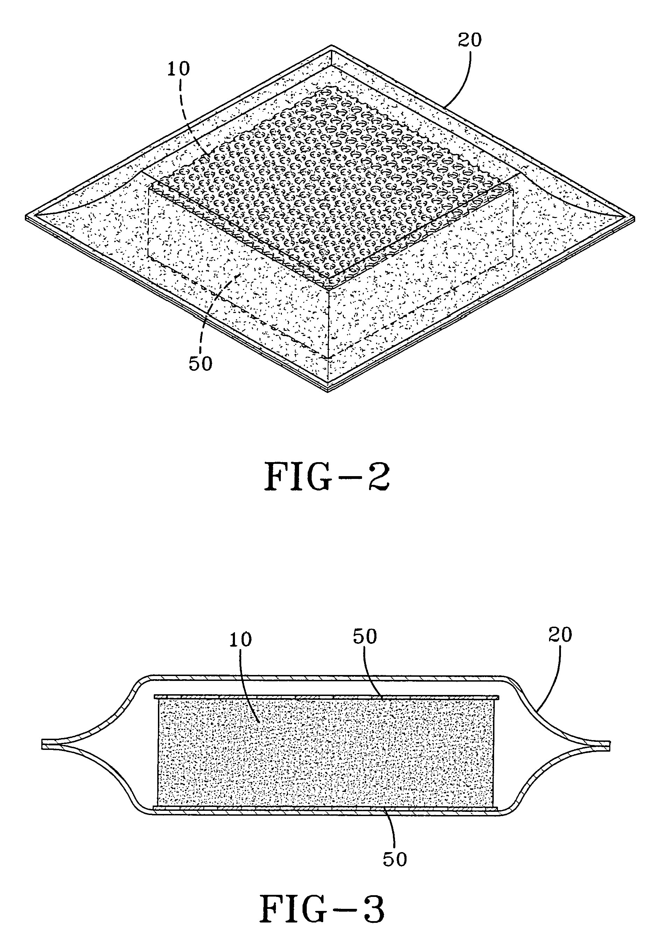

As illustrated in FIGS. 1 to 3, 40~90 parts by weight of the prepared phenol resin, 1~30 parts by weight of the surfactant, 3~30 parts by weight of the foaming agent, and the acidic foaming agent, making up the balance of 100%, are foamed to obtain a foamed body, which is then cut to a predetermined size, thus forming a predetermined panel 10. Further, a nonwoven fabric envelope 20 is prepared in the form of an envelope by using nonwoven fabric. The panel 10 is placed in the nonwoven fabric envelope 20, after which the end portion of the envelope is sealed through heat adhesion to prevent the fragments of the foamed body from being externally discharged.

Further, it is preferred that porous pads 50 be provided on the upper and lower surfaces of the panel 10 in the nonwoven fabric envelope 20. The porous pads function to increase the weight of the foam product in order to prevent the foam product from easily flying away in a windy situation.

In addition, the performance of the oil absorbent, which is the foamed body produced through the production method of the present invention, has been verified through various experiments. The test certificates and the test reports from a certified organization are attached.

The performance of the mat- and cushion-type foamed body was tested by Korea Machinery Meter and Petrochemical Testing Research Institute. As results thereof, outstanding absorption capability was confirmed.

TABLE 2

| No. OA-0619 | | |
|---|---|---|
| Certificate for Passing Performance Test | | |
| ① Name of material or agent for preventing marine pollution, | | Oil absorbent |
| ② Types of material or agent | | Mat type (SOM-5040L) |
| Applicant for formal approval | ③ Firm name and Address | SMITHERS-OASIS Korea 196-4 yongjeong-Ri, Epchang-Myun, Chunan city, Chungnam-do, Korea, |
| | ④ Name | Kim Kwang-Soo |
| ⑤ Location of a factory (a business office) | | SMITHERS-OASIS Korea 196-4 yongjeong-Ri, Epchang-Myun, Chunan city, Chungnam-do, Korea |
| ⑥ Production Date | | December 21, 2006 |
| ⑦ Production Number | | MOAM0612-02 |
| We verify that the above material passed the performance test under the Law for Preventing Marine Pollution Act 64 (3) and Rules 105(2) and (4) January 12, 2007 The president of Korea Machinery-Meter and Petrochemical Testing and Research Institute (signature) | | |

Performance Test Certificate of Mat-Type Panel

Table 3

| No. OA-0621 | | |
|---|---|---|
| Certificate for Passing Performance Test | | |
| ① Name of material or agent for preventing marine pollution, | | Oil absorbent |
| ② Types of Material or agent | | cushion type (SOC-4023HP) |
| Applicant for formal approval | ③ Firm name and Address | SMITHERS-OASIS Korea 196-4 yongjeong-Ri, Epchang-Myun, Chunan city, Chungnam-do, Korea, |
| | ④ Name | Kim Kwang-Soo |
| ⑤ Location of a factory (a business office) | | SMITHERS-OASIS Korea 196-4 yongjeong-Ri, Epchang-Myun, Chunan city, Chungnam-do, Korea |
| ⑥ Production Date | | December 21, 2006 |
| ⑦ Production Number | | COAM0612-03 |
| We verify that the above material passed the performance test under the Law for Preventing Marine Pollution Act 64 (3) and Rules 105(2) and (4) January 12, 2007 The president of Korea Machinery-Meter and Petrochemical Testing and Research Institute (signature) | | |

Performance Test Certificate of Cushion-Type Panel

Table 4

KOREA MACHINERY-METER AND PETROCHEMICAL
TESTING & RESEARCH INSTITUTE

587-10, Sinsa-dong Gangnam-gu Seoul. Korea 135-892 · http://www.mpi.or.kr
TEL:82-2-2056-4730~8  FAX:82-2-543-3934

(1) page of (1)

## Test Report

Report No. : OA – 0 6 2 1 (Dec. 21, 2006)                    Date : Jan. 12, 2007

Address of the client : 196-4 Yongjeong-Ri, Epchang-Myun, Chunan city, Chungnam-Do, Korea

Company : SMITHERS-OASIS Korea

Representative : Kim Kwang-Soo

Product Sampled : Oil Absorbent (Cushion, SOC-4023HP)

Date of Test : Dec. 21, 2006 ~ Jan. 12, 2007

Use of Report : Performance Test

Testing Condition : (21 ~ 22) ℃, (47 ~ 49) % R.H.

| Test items | | Results | Testing methods |
|---|---|---|---|
| Temperature test | – 20 ℃ | pass | Korea Coast Guard Notice No. 2005-01 (Jan. 8, 2005) |
| | + 66 ℃, 90 % R.H. | pass | |
| The quantity of oil absorption | g/g | 22.4 | |
| | g/cm$^3$ | 1.01 | |
| The quantity of water absorption | g/g | 0.28 | |
| | g/cm$^3$ | 0.03 | |
| Shaking test | breakage | pass | |
| | sinking | pass | |
| The test of oilproof | | pass | |
| The degree of strength | | pass | |
| The test of incineration ( mL/g ) | | 0.23 | |
| The quantity of oil absorption ( times ) | | 23.4 | |
| Solvent resistibility ( at toluene ) | | pass (97.5 %) | |

Remark : 1. This report is based on the test and analysis performed with
the sample(s) submitted by the client. Therefore, the result
does not guarantee the quality of entire products.
2. The report should not be used for advertising, lawsuit etc.
without any official permission of MPI. It is only used
for purpose of the quality test. End.

Prepared by : Hong Jin-Suk                    Approved by
                                              Technical Manager : Ryu Seung-Hyun
                    President _____

KOREA MACHINERY-METER AND PETROCHEMICAL
TESTING & RESEARCH INSTITUTE

☐Gyunggi Bukbu Branch:(031)474-8801   ☐Busan Gyungnam Branch:(051)336-1566   ☐Daegu Gyungbuk Branch:(053)741-7533
        ☐Daejon Chungcheong Branch:(042)625-6190   ☐Gwangju Honam Branch:(062)944-1094

Performance Test Report of Mat-Type Panel

## EP 1 953 188 A1

Table 5

### KOREA MACHINERY-METER AND PETROCHEMICAL TESTING & RESEARCH INSTITUTE

587-10, Sinsa-dong Gangnam-gu Seoul. Korea 135-892 · http://www.mpi.or.kr
TEL:82-2-2056-4730~8 FAX:82-2-543-3934

(1) page of (1)

## Test Report

Report No. : OA - 0 6 1 9 (Dec. 21, 2006)          Date : Jan. 12, 2007

Address of the client : 196-4 Yongjeong-Ri, Epchang-Myun, Chunan city, Chungnam-Do, Korea

Company : SMITHERS-OASIS KOREA

Representative : Kim Kwang-Soo

Product Sampled : Oil Absorbent (Mat, SOM-5040L)

Date of Test : Dec. 21, 2006 ~ Jan. 12, 2007

Use of Report : Performance Test

Testing Condition : (21 ~ 22) ℃. (47 ~ 49) % R.H.

| Test items | | Results | Testing methods |
|---|---|---|---|
| Temperature test | - 20 ℃ | pass | Korea Coast Guard Notice No. 2005-01 (Jan. 8, 2005) |
| | + 66 ℃, 90 % R.H. | pass | |
| The quantity of oil absorption | g/g | 44.6 | |
| | g/cm$^3$ | 1.02 | |
| The quantity of water absorption | g/g | 0.63 | |
| | g/cm$^3$ | 0.05 | |
| Shaking test | breakage | pass | |
| | sinking | pass | |
| The test of oilproof | | pass | |
| The degree of strength | | pass | |
| The test of incineration ( mL/g ) | | 0.35 | |
| The quantity of oil absorption ( 10 cm × 10 cm, Kg ) | | 2.2 | |
| Solvent resistibility ( at toluene ) | | pass (98.0 %) | |

Remark : 1. This report is based on the test and analysis performed with the sample(s) submitted by the client. Therefore, the result does not guarantee the quality of entire products.
2. The report should not be used for advertising, lawsuit etc. without any official permission of MPI. It is only used for purpose of the quality test. End.

Prepared by : Hong Jin-Suk

Approved by
Technical Manager : Ryu Seung-Hyun

President _____

### KOREA MACHINERY-METER AND PETROCHEMICAL TESTING & RESEARCH INSTITUTE

☐Gyunggi Bukbu Branch:(031)474-8801    ☐Busan Gyungnam Branch:(051)336-1566    ☐Daegu Gyungbuk Branch:(053)741-7533
☐Daejon Chungcheong Branch:(042)625-6190    ☐Gwangju Honam Branch:(062)944-1094

Performance Test Report of Cushion-Type Panel

[Effect of the Invention]

As described hereinbefore, the oil absorbent of the present invention may be easily produced, and has numerous pores formed therein to facilitate the absorption of oil. Therefore, upon marine oil spill accidents or terrestrial oil spill accidents, the oil absorbent of the present invention is thrown onto the oil to thus readily absorb oil.

In addition, the oil absorbent of the present invention may be produced in great amounts at very low cost, thus realizing high applicability.

Description of the elements in the drawings

10: cushion-type panel
20: envelope
50: porous pad

**Claims**

1. A method of producing an oil-absorbable foamed body, comprising:

   a first step of adding 40~90 part by weight of a phenol resin and 1~30 part by weight of a surfactant, and stirring them,
   a second step of adding 3~30 part by weight of a foaming agent to the stirred phenol resin and surfactant, and stirring them;
   a third step of adding an acidic curing agent making up a balance of 100% by weight to the stirred mixture of the second step and then mixing them using a mixer; and
   a fourth step of foaming the mixed compounds at a temperature of 5~150°C, thus obtaining a foamed body for absorbing oil.

2. The method as set forth in claim 1, wherein the phenol resin obtained from the first step is obtained by steps of adding 40~75 part by weight of phenol, 0.5~10 part by weight of a basic catalyst, and formaldehyde making up a balance of 100% by weight, into a stirring bath and conducting a synthesis;
   subjecting the stirred mixture to the synthesis with controlling a temperature at 50~100°C for 30 min to 10 hours;
   stopping the control of the temperature to cool it down to 20~40°C and adding an acid to adjust a pH to 5~7; and
   undergoing a dehydration process in which the mixture is heated under a reduced pressure after the addition of the acid to eliminate water from a solution, thereby obtaining the phenol resin.

3. The method as set forth in claim 1 or 2, wherein the prepared phenol resin has a resin viscosity of 1000~100000 cps at 25°C and a water content of 1~20%.

4. An oil-absorbable foamed body, obtained by foaming 40~90 part by weight of a phenol resin, 1~30 part by weight of a surfactant, 3~30 part by weight of a foaming agent, and an acidic curing agent making up a balance of 100% by weight.

5. The oil-absorbable foamed body as set forth in claim 4, wherein the phenol resin is prepared by adding 0.5~10 part by weight of the basic catalyst to 40~75 part by weight of phenol, and adding formaldehyde making up a balance of 100% by weight.

6. The oil-absorbable foamed body as set forth in claim 4, wherein the foamed body has an average pore diameter of 150~205 μm.

7. The oil-absorbable foamed body as set forth in claim 4, wherein the foamed body has a porosity of 85~92%.

8. The oil-absorbable foamed body as set forth in claim 4, wherein as the surfactant, a non-ionic surfactant and a silicone surfactant can be used.

9. The foamed body as set forth in claim 8, wherein the nonionic surfactant is one or more selected from the group consisting alcohol ethoxylate; alkylphenol ethoxylate; polyoxyethylene ester; ethoxylated anhydrosorbitol ester; ethoxylated natural fat or oil; ethoxylated lanolin; polyoxyethylene amine; polyoxyethylene fatty acid amide; block copolymer of ethylene oxide and alkylene oxide having a molecular weight greater than that of ethylene oxide.

10. The foamed body as set forth in claim 8, wherein the silicon surfactant is one or more selected from the group consisting of silicone polyether copolymer; methyl silicone; dimethyl silicone; polydimethyl silicone; methyl hydrogen silicone; dimethyl siloxane; and alkyl modified silicone.

**11.** The foamed body as set forth in claim 4, wherein the foaming agent has a boiling point of 20~100°C and is one or more selected from $C_{4-8}$ cyclic or chain alkane, alkene, alkyne, petroleum ether, and a foaming agent including a fluorine such as monochlorotrifluoromethane.

**12.** The foamed body as set forth in claim 4, wherein the acidic curing agent is one or more selected from the group consisting of inorganic acid; phosphoric acid; aromatic sulfonic acid; and alkyl sulfonic acid.

**13.** An oil-absorbable foam product, which combining:

a foamed body panel (10), obtained by foaming 40~90 part by weight of a phenol resin, 1~30 part by weight of a surfactant, 3~30 part by weight of a foaming agent, and an acidic foaming agent making up a balance of 100% by weight to produce a foamed body and cutting it into a panel form; and
a nonwoven fabric envelope (20) for enveloping the foamed body panel (10); and
which is commercially available.

**14.** The foam product as set forth in claim 13, wherein in the non-woven fabric envelope (20), porous pads (50) are provided on upper and lower surfaces of the panel (10).

FIG-1

FIG-2

FIG-3

FIG-4

**European Patent Office**

**EUROPEAN SEARCH REPORT**

Application Number

EP 07 02 4882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 078 228 A (COAL INDUSTRY PATENTS LTD) 6 January 1982 (1982-01-06) | 1-9,11, 12 | INV. C08J9/14 C09K3/32 |
| Y | * example * <br> * claim 9 * | 10 | |
| X | US 5 852 064 A (LAMARTINE ROGER [FR] ET AL) 22 December 1998 (1998-12-22) * claim 1 * | 4 | |
| A | US 4 769 084 A (GUBELA HANS-ERICH [DE]) 6 September 1988 (1988-09-06) * column 5, line 1 - column 6, line 2 * * claims * | 13,14 | |
| Y | GB 1 283 113 A (FIBREGLASS LTD [GB]; PHILIP BODEN; PHILIP JOHN CROOK [GB]; MICHAEL EDG) 26 July 1972 (1972-07-26) * claims * | 10 | |

TECHNICAL FIELDS SEARCHED (IPC)

C08J
C09K

The present search report has been drawn up for all claims

| Place of search | Date of completion of the search | Examiner |
|---|---|---|
| The Hague | 2 June 2008 | Oudot, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 02 4882

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2008

| Patent document cited in search report | | Publication date | Patent family member(s) | | Publication date |
|---|---|---|---|---|---|
| GB 2078228 | A | 06-01-1982 | NONE | | |
| US 5852064 | A | 22-12-1998 | AT | 183216 T | 15-08-1999 |
| | | | CA | 2221287 A1 | 21-11-1996 |
| | | | CH | 689941 A5 | 15-02-2000 |
| | | | WO | 9636659 A1 | 21-11-1996 |
| | | | DE | 69603718 D1 | 16-09-1999 |
| | | | DE | 69603718 T2 | 02-03-2000 |
| | | | EP | 0826015 A1 | 04-03-1998 |
| | | | ES | 2136403 T3 | 16-11-1999 |
| US 4769084 | A | 06-09-1988 | CA | 1165748 A1 | 17-04-1984 |
| | | | EP | 0040821 A1 | 02-12-1981 |
| | | | NO | 811717 A | 23-11-1981 |
| GB 1283113 | A | 26-07-1972 | BE | 764222 A1 | 13-09-1971 |
| | | | CA | 988243 A1 | 27-04-1976 |
| | | | DE | 2112061 A1 | 23-09-1971 |
| | | | FR | 2081919 A5 | 10-12-1971 |
| | | | IE | 34988 B1 | 15-10-1975 |
| | | | NL | 7103184 A | 15-09-1971 |
| | | | ZA | 7101543 A | 30-08-1972 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 19951581
- KR 302467
- KR 10200339538
- KR 199745